# EUROPÄISCHE PATENTSCHRIFT

(11) **EP 3 631 554 B1**
(45) Veröffentlichungstag und Bekanntmachung des Hinweises auf die Patenterteilung: **04.10.2023**
(21) Anmeldenummer: 18722420.9
(22) Anmeldetag: 23.04.2018
(51) Int. Cl.: G02B 19/00, F21V 7/00, F21V 5/04

(54) **OPTISCHE ANORDNUNG FÜR EINE LICHTQUELLE**
OPTICAL ARRANGEMENT FOR A LIGHT SOURCE
DISPOSITIF OPTIQUE POUR SOURCE DE LUMIÈRE

(30) Priorität: 26.05.2017 DE 202017103188 U
(43) Veröffentlichungstag der Anmeldung: 08.04.2020
(73) Patentinhaber: Zumtobel Lighting GmbH, 6850 Dornbirn (AT)
(72) Erfinder: ESCOURROU, Thibaut, 6850 Dornbirn (AT)
(74) Vertreter: Thun, Clemens
(86) Internationale Anmeldenummer: PCT/EP2018/060285
(87) Internationale Veröffentlichungsnummer: WO 2018/215151

(56) Entgegenhaltungen:
- EP-A1- 2 535 639
- EP-A2- 2 626 620
- WO-A1-2011/061120
- WO-A1-2015/038971
- WO-A1-2016/146622
- US-B1- 8 430 536

## Beschreibung

Die Anmeldung betrifft eine optische Anordnung für eine Lichtquelle, wobei die Anordnung eine so genannte TIR-Linse (TIR: total internal reflection; interne Totalreflexion) aufweist. Außerdem betrifft die Anmeldung eine Vorrichtung zur Lichtabgabe mit einer Lichtquelle und einer entsprechenden optischen Anordnung. Aus dem Stand der Technik sind Leuchten bekannt, welche eine TIR-Linse und einen Reflektor, welcher unterhalb der Linse montiert ist, aufweisen. In der US 8430 536 B1 ist eine derartige Leuchte beschrieben, wobei unterschiedlich geformte Reflektoren an eine TIR-Linse anbringbar sind, wodurch unterschiedliche Lichtabstrahleigenschaften der Leuchte erzielt werden. Der Reflektor weist hierbei eine glatte, durchgehende und nicht reflektierende innere Oberfläche auf, welche in einer Ausführung eine polierte Oberfläche aus einer Aluminiumlegierung besteht. Die innere Oberfläche des Reflektors kann hierbei aus einzelnen mehreren reflektierenden Teilflächen bestehen.

Die WO 2015/038971 A1 offenbart eine LED, eine TIR-Linse mit einer planen Lichtaustrittsfläche und einen Reflektor.

Die EP 2 626 620 A2 beschreibt einen Reflektor für eine Lampe, insbesondere für Glühlampen oder Halogenlampen, wobei der Reflektor derart ausgebildet ist, dass die Lampe eine möglichst homogene Lichtabgabe hinsichtlich Lichtfarbe und Lichthelligkeit trotz Fertigungsungenauigkeiten und/oder Gebrauchserscheinungen, wie beispielsweise Materialablagerungen an der Innenseite einer Glühbirne, welche insbesondere ungleichmäßig erscheinen können, erzielt. Hierbei wird beschrieben, dass die innere Oberfläche des Reflektors aus Oberflächensegmenten besteht, welche je eine gekrümmte reflektierende Oberfläche aufweisen, sodass eine möglichst gleichmäßige Lichtabgabe im Raum erzielt wird.

Die EP 2 535 639 A1 beschreibt einen Leuchten-Reflektor, bestehend aus einem hohlen, schalenförmig gewölbten Reflektorkörper mit einer inneren Reflexionsfläche und mit einem in Richtung seiner Längsmittelachse zwischen einer hinteren, kleineren Leuchtmittelöffnung und einer vorderen, größeren Lichtaustrittsöffnung zunehmenden Innendurchmesser. Die Reflexionsfläche weist eine Vielzahl von strukturierten Facetten auf, wobei die Facetten unter anderem eine konkave Oberfläche aufweisen können.

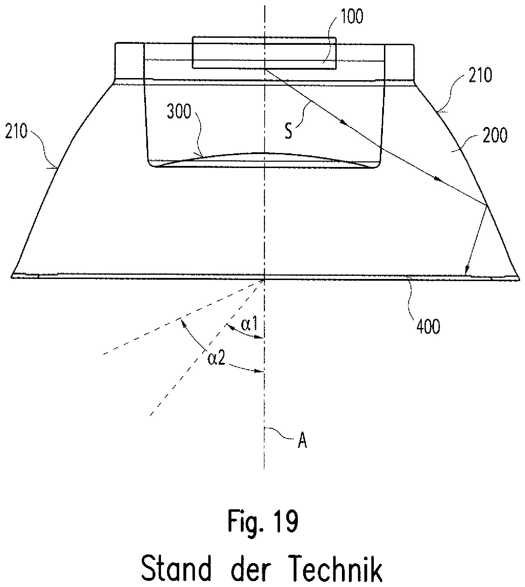

Aus dem Stand der Technik ist ferner eine, in Fig. 19 im Querschnitt skizzierte, so genannte TIR-Linse 200 für eine LED-Lichtquelle 100 (LED: Licht emittierende Diode) bekannt. Die TIR-Linse 200 weist eine Lichteintrittsfläche 300 für einen Eintritt eines von der LED-Lichtquelle 100 erzeugten Lichts in die TIR-Linse 200 auf, sowie eine Lichtaustrittsfläche 400 für einen Austritt des Lichts aus der TIR-Linse 200.

Zwischen der Lichteintrittsfläche 300 und der Lichtaustrittsfläche 400 befindet sich eine Mantel- bzw. Seitenfläche 210. Diese ist derart geformt, dass - wie anhand eines exemplarischen Lichtstrahls S angedeutet - diejenigen Lichtstrahlen, die über die Lichteintrittsfläche 300 in die TIR-Linse 200 eingetreten sind und auf die Mantelfläche 210 treffen, dort eine Totalreflexion erfahren.

Die LED-Lichtquelle 100 strahlt das Licht in einem sehr großen Raumwinkel ab, es ist also unmittelbar nach der Abgabe "weit aufgefächert". Mit Hilfe der TIR-Linse 200 lässt sich das Licht bündeln, so dass es nach Austritt über die Lichtaustrittsfläche 400 enger begrenzt bzw. gebündelter ist.

Durch die TIR-Linse 200 ist eine optische Achse A festgelegt, wobei die Lichtstrahlen durch die TIR-Linse 200 im Wesentlichen zur optischen Achse A hin gerichtet werden. Normal zur optischen Achse A betrachtet ist die Lichtaustrittsfläche 400 im Wesentlichen rechteckig geformt. Die TIR-Linse 200 eignet sich somit zusammen mit der LED-Lichtquelle 100 beispielsweise zur Beleuchtung einer (in Fig. 19 nicht gezeigten) Arbeitsfläche, die in einem gewissen Abstand von der Lichtaustrittsfläche 400 normal zur optischen Achse A orientiert ist.

Das von der TIR-Linse 200 abgegebene Licht weist trotz der bündelnden Eigenschaft der TIR-Linse 200 einen nennenswerten Anteil in einem Winkelbereich auf, der sich mit Bezug auf die optische Achse A zwischen α2 = 65° und 90° erstreckt. Auch der Anteil zwischen α1 = 40° und α2 = 65° ist nicht unerheblich. Hierdurch ist - beispielsweise bei Verwendung der Anordnung im Rahmen einer üblichen Bürobeleuchtung - die Gefahr einer unerwünschten Blendung gegeben.

Der Erfindung liegt die Aufgabe zugrunde, eine entsprechende verbesserte optische Anordnung anzugeben; insbesondere soll die Anordnung vorteilhafte Eigenschaften mit Bezug auf die Blendungseigenschaften aufweisen. Außerdem soll eine entsprechende Vorrichtung zur Lichtabgabe angegeben werden.

Diese Aufgabe wird gemäß der Erfindung mit den im unabhängigen Anspruch genannten Gegenständen gelöst. Besondere Ausführungsarten der Erfindung sind in den abhängigen Ansprüchen angegeben.

Gemäß der Erfindung ist eine optische Anordnung für eine Lichtquelle wie in Anspruch 1 definiert vorgesehen

Durch den Reflektor lässt sich insbesondere erzielen, dass die Lichtabgabe in den Winkelbereichen über 65° und zwischen 40° und 65° reduziert ist. Dies ist vorteilhaft, weil hierdurch die Gefahr einer Blendung eines Nutzers der Anordnung reduziert ist. Vorzugsweise ist durch die TIR-Linse eine optische Achse festgelegt, wobei der Reflektor sich ringförmig, insbesondere geschlossen ringförmig um die optische Achse herum erstreckend ausgebildet ist. Hierdurch lässt sich eine besonders effektive Beeinflussung des Lichts durch den Reflektor bewirken.

Vorzugsweise ist die TIR-Linse zumindest überwiegend auf einer ersten Seite einer Ebene angeordnet und der Reflektor zumindest überwiegend auf einer, der ersten Seite gegenüberliegenden zweiten Seite der Ebene. Hierdurch lässt sich die gewünschte Reduzierung der Lichtabgabe in den genannten Winkelbereichen besonders effektiv und dabei vorteilhaft mit Bezug auf die Herstellungsmöglichkeiten der Anordnung realisieren. Besonders vorteilhaft ist der Reflektor unmittelbar an die TIR-Linse angrenzend angeordnet.

Vorzugsweise weist der Lichteintrittsbereich eine Größe auf, die zwischen 70% und 120% der Größe der Lichtaustrittsfläche beträgt. So lässt sich erzielen, dass ein besonders großer Anteil des aus der TIR-Linse ausgetretenen Lichts in den Reflektor eintritt.

Erfindungsgemäß weist der Reflektor eine reflektierende Fläche mit Segmenten auf, die jeweils eine konvexe Oberfläche aufweisen, insbesondere in Form eines Teils einer Kugeloberfläche. Hierdurch lässt sich bewirken, dass das Licht, das die Anordnung verlässt, auf einer mit dem Licht beleuchteten Arbeitsfläche besonders homogen erscheint.

In einer Alternative, die nicht unter den Gegenstand der Ansprüche fällt, weist der Reflektor vorteilhaft eine reflektierende Fläche auf, die glatt oder rau gestaltet ist.

Vorzugsweise ist die reflektierende Fläche hochglänzend, insbesondere metallisiert. Dies ist vorteilhaft mit Bezug auf den lichttechnischen Wirkungsgrad.

Vorzugsweise ist der Reflektor als ein Spritzgussteil gestaltet. Dies ist herstellungstechnisch vorteilhaft.

Vorzugsweise beinhaltet ein optisches Element der optischen Anordnung die TIR-Linse, wobei das optische Element zumindest eine weitere TIR-Linse umfasst, die identisch zu der TIR-Linse gestaltet ist, so dass sie dementsprechend zumindest eine weitere Lichtaustrittsfläche aufweist, wobei das optische Element derart gestaltet ist, dass die Lichtaustrittsfläche der TIR-Linse und die Lichtaustrittsfläche der zumindest einen weiteren TIR-Linse in einer Lichtaustrittsebene orientiert ausgebildet sind. So lässt sich besonders geeignet erzielen, dass mit Hilfe der Anordnung besonders intensives Licht abgegeben werden kann.

Dabei weist die Anordnung vorzugsweise außerdem zumindest einen weiteren Reflektor auf, wobei die zumindest eine weitere TIR-Linse und der zumindest eine weitere Reflektor analog zu der TIR-Linse und dem Reflektor gestaltet sind.

Eine besonders geeignete Herstellungsmöglichkeit ist dabei gegeben, wenn ein weiteres optisches Element der optischen Anordnung den zumindest einen weiteren Reflektor und den Reflektor beinhaltet.

Gemäß einem weiteren Aspekt der Erfindung ist eine Vorrichtung zur Lichtabgabe vorgesehen, die eine Lichtquelle aufweist, sowie eine erfindungsgemäße optische Anordnung für die Lichtquelle, wobei die Lichtquelle derart angeordnet ist, dass ein von ihr abgegebenes Licht über die Lichteintrittsfläche in die TIR-Linse der optischen Anordnung eintreten kann.

Die Erfindung wird im Folgenden anhand eines Ausführungsbeispiels und mit Bezug auf die Zeichnungen näher erläutert. Es zeigen:
- Fig. 1: eine Querschnitt-Skizze zu einer Ausgestaltung einer anmeldungsgemäßen Vorrichtung mit einer Lichtquelle und einer erfindungsgemäßen optischen Anordnung für die Lichtquelle,
- Fig. 2a: eine Skizze einer Schnitt-Ansicht der Vorrichtung,
- Fig. 2b: ein Detail aus Fig. 2a zur Formgebung des Reflektors,
- Fig. 3: eine Skizze mit exemplarischen Lichtstrahlen, die durch die Vorrichtung beeinflusst werden,
- Fig. 4: eine perspektivische Skizze der TIR-Linse der Vorrichtung,
- Fig. 5: eine Skizze mit exemplarischen Lichtstrahlen, die durch die TIR-Linse beeinflusst werden,
- Fig. 6: eine perspektivische Skizze des Reflektors der Vorrichtung,
- Fig. 7: eine perspektivische Skizze eines möglichen Werkzeugs zur Herstellung des Reflektors, das nicht unter den Gegenstand der Ansprüche fällt,
- Fig. 8: eine Skizze einer Seitenansicht einer weiteren Ausgestaltung einer erfindungsgemäßen Vorrichtung mit mehreren TIR-Linsen und mehreren Reflektoren,
- Fig. 9: eine Querschnittskizze der TIR-Linsen und der Lichtquelle der Vorrichtung,
- Fig. 10: eine perspektivische Skizze zu der Vorrichtung bei schräger Sicht von der Seite,
- Fig. 11: eine perspektivische Skizze der Vorrichtung bei schräger Sicht auf die Reflektoren,
- Fig. 12: eine der Fig. 11 entsprechende Ansicht mit exemplarischen Lichtstrahlen,
- Fig. 13: ein Detail aus Fig. 11,
- Fig. 14: eine der Fig. 12 entsprechende Darstellung bei schräger Sicht von der Seite,
- Fig. 15: eine perspektivische Skizze der Reflektoren der Vorrichtung in separierter Form bei schräger Sicht auf die Lichteintrittsbereiche,
- Fig. 16: eine perspektivische Skizze der Reflektoren der Vorrichtung bei schräger Sicht auf die Lichtaustrittsbereiche,
- Fig. 17: eine Skizze der Reflektoren der Vorrichtung bei Sicht auf die Lichteintrittsbereiche,
- Fig. 18: eine Skizze der Vorrichtung bei Sicht auf die Lichtaustrittsbereiche, und
- Fig. 19: eine Skizze zu einer TIR-Linse gemäß dem Stand der Technik.

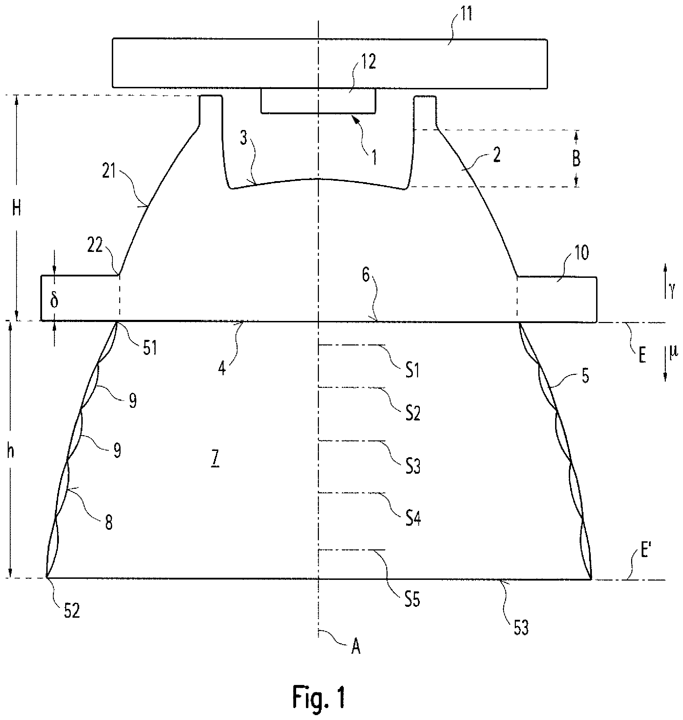

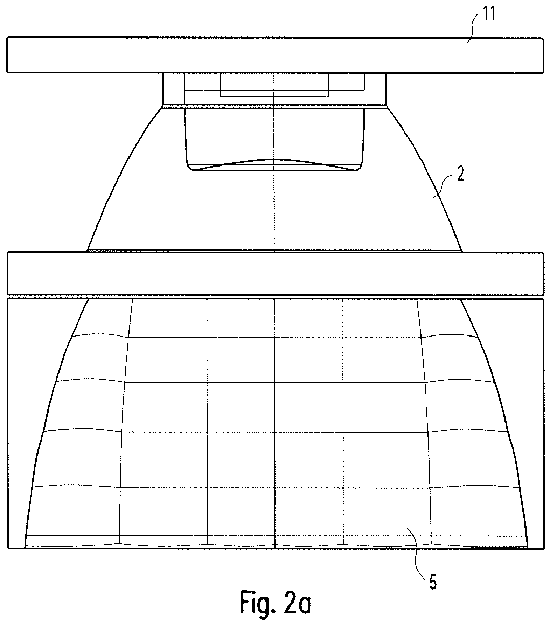

Fig. 1 zeigt eine Querschnitt-Skizze zu einer anmeldungsgemäßen Vorrichtung zur Lichtabgabe. Fig. 2a zeigt eine entsprechende Schnitt-Ansicht. Die Vorrichtung weist eine Lichtquelle 1 auf, sowie eine erfindungsgemäße optische Anordnung für die Lichtquelle 1. Bei der Lichtquelle 1 kann es sich insbesondere um eine LED-Lichtquelle mit einer Platine 11 und zumindest einer darauf angeordneten LED 12 handeln.

Die optische Anordnung - im Folgenden auch kurz als Anordnung bezeichnet - umfasst eine TIR-Linse 2 mit einer Lichteintrittsfläche 3 für einen Eintritt eines von der Lichtquelle 1 erzeugten Lichts in die TIR-Linse 2 und mit einer planen Lichtaustrittsfläche 4 für einen Austritt des Lichts aus der TIR-Linse 2. Erfindungsgemäß weist die TIR-Linse 2 außerdem zwischen der Lichteintrittsfläche 3 und der Lichtaustrittsfläche 4 eine Mantelfläche 21 auf, die derart geformt ist, dass von der Lichtquelle 1 abgegebene Lichtstrahlen, die über die Lichteintrittsfläche 3 in die TIR-Linse 2 eingetreten sind und auf die Mantelfläche 21 treffen, dort total reflektiert werden.

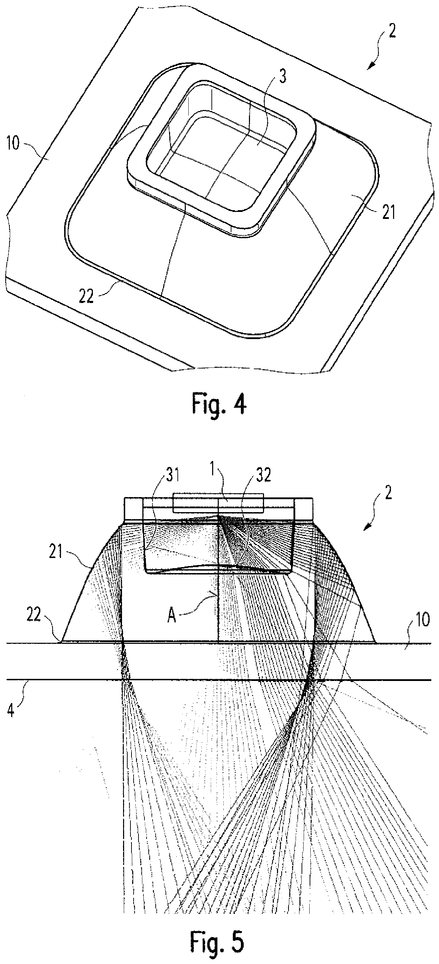

Fig. 4 zeigt eine perspektivische Skizze zu der TIR-Linse 2 bei schräger Ansicht auf die Lichteintrittsfläche 3. Fig. 5 zeigt exemplarisch den Verlauf einiger Lichtstrahlen durch die TIR-Linse 2. Man erkennt, dass Lichtstrahlen, die auf die Mantelfläche 21 treffen, dort totalreflektiert werden.

Durch die TIR-Linse 2 ist eine optische Achse A festgelegt, die sowohl die Lichteintrittsfläche 3, als auch die Lichtaustrittsfläche 4 durchsetzt. Die Lichtaustrittsfläche 4 ist vorzugsweise normal zu der optischen Achse A orientiert.

Die TIR-Linse 2 weist - entlang der optischen Achse A betrachtet - eine Erstreckung bzw. Höhe H auf, die beispielsweise zwischen 2 cm und 10 cm betragen kann, vorzugsweise zwischen 3 cm und 8 cm.

Die Lichteintrittsfläche 3 ist beim gezeigten Beispiel derart geformt, dass sie eine Ausnehmung bildet, wobei die Lichtquelle 1 vorzugsweise mit einer lichtabgebenden Fläche, insbesondere mit der zumindest einen LED 12 in die Ausnehmung eingreifend angeordnet ist. Sie umfasst dabei eine Bodenfläche 32 und eine umlaufende Seitenfläche 31. Dabei ist die Gestaltung derart, dass diejenigen Lichtstrahlen der Lichtquelle 1, die über die Seitenfläche 31 in die TIR-Linse 2 eintreten, zumindest überwiegend an der Mantelfläche 21 total reflektiert werden. Diejenigen Lichtstrahlen, die über die Bodenfläche 32 eintreten, treffen nach Eintritt zumindest überwiegend unmittelbar zu der Lichtaustrittsfläche 4; diese zuletzt genannten Lichtstrahlen erfahren also zwischen Eintritt und Austritt zumindest überwiegend keine Richtungsablenkung.

Beim gezeigten Beispiel weist die TIR-Linse 2 weiterhin einen Flanschbereich 10 auf, der sich unmittelbar an die Mantelfläche 21 anschließt und der andererseits in die Lichtaustrittsfläche 4 übergeht bzw. die Lichtaustrittsfläche 4 bildet. Vorzugsweise erstreckt sich der Flanschbereich 10 normal zur optischen Achse A. Der Flanschbereich 10 grenzt insbesondere unmittelbar an die Mantelfläche 21, so dass zwischen der Mantelfläche 21 und dem Flanschbereich 10 eine mit Bezug auf die optische Achse A umlaufende Kante 22 gebildet ist. Mit "Lichtaustrittsfläche" der TIR-Linse 2 sei hier derjenige Flächenbereich der TIR-Linse 2 bezeichnet, der durch die Projektion der umlaufenden Kante 22 - parallel zur optischen Achse A - umschrieben ist, wie in Fig. 1 gestrichelt angedeutet.

Wie sich aus der perspektivischen Skizze der Fig. 4 schließen lässt, weist der Lichtaustrittsbereich 4 beim gezeigten Beispiel die Form eines Rechtecks mit abgerundeten Eckbereichen auf. Das Rechteck kann dabei ein Seitenlängenverhältnis von beispielsweise 1 : 1 aufweisen, also ein Quadrat darstellen; alternativ kann das Seitenlängenverhältnis beispielsweise zwischen 1 : 1 und 3 : 1, vorzugsweise zwischen 1 : 1 und 2 : 1 betragen.

Die Seitenlängen des Rechtecks können beispielsweise im Bereich zwischen 1 cm und 10 cm liegen, vorzugsweise im Bereich zwischen 2 cm und 8 cm.

Die Mantelfläche 21 erstreckt sich vorzugswiese ringförmig geschlossen um die optische Achse A herum. Vorzugsweise erstreckt sich die Mantelfläche 21 - entlang der optischen Achse A betrachtet - in einen Überlappungsbereich B, in dem sie mit der Lichteintrittsfläche 3, insbesondere mit deren Seitenfläche 31 überlappt. Vorzugsweise ist die Mantelfläche 21 in jedem Schnitt durch die optische Achse A betrachtet konvex gekrümmt, insbesondere zwischen dem Überlappungsbereich B und der Kante 22 ausschließlich konvex gekrümmt.

Der Flanschbereich 10 weist entlang der optischen Achse A betrachtet eine Erstreckung bzw. Stärke δ auf, wobei das Verhältnis δ / H beispielsweise zwischen 1 / 20 und 1 / 2 liegen kann, vorzugsweise zwischen 1 / 10 und 1 / 3.

Weiterhin umfasst die Anordnung einen Reflektor 5 zur Beeinflussung des über die Lichtaustrittsfläche 4 aus der TIR-Linse 2 ausgetretenen Lichts, wobei durch den Reflektor 5 ein Lichteintrittsbereich 6 für einen Eintritt des aus der TIR-Linse 2 ausgetretenen Lichts in einen Innenbereich 7 des Reflektors 5 gebildet ist. Dabei entspricht der Lichteintrittsbereich 6 in seiner Form der Form der Lichtaustrittsfläche 4 der TIR-Linse 2. Beim gezeigten Beispiel weist der Lichteintrittsbereich 6 somit ebenfalls die Form eines entsprechenden Rechtecks mit abgerundeten Eckbereichen auf.

Alternativ könnten beide Formen beispielsweise kreisförmig sein oder entsprechend übereinstimmend polygonal.

Insbesondere ist der Reflektor 5 sich ringförmig um die optische Achse A herum erstreckend ausgebildet. Im gezeigten Beispiel erstreckt er sich in geschlossener Ringform. Somit weist der Reflektor 5 mit Bezug auf die optische Achse A einen, den Lichteintrittsbereich 6 festlegenden bzw. begrenzenden ersten Randbereich 51 auf, der sich in entsprechender Weise um die optische Achse A herum erstreckt, sowie einen zweiten Randbereich 52, der sich auf der entsprechenden gegenüberliegenden Seite um die optische Achse A herum erstreckt. Im gezeigten Beispiel liegt der erste Randbereich 51 in einer Ebene E, die insbesondere mit Bezug auf die optische Achse A normal orientiert ist. Vorzugsweise liegt der zweite Randbereich 52 in einer weiteren Ebene E', die insbesondere parallel zu der zuerst genannten Ebene E orientiert ist.

Der Innenbereich 7 des Reflektors 5 ist somit mit Bezug auf die optische Achse A radial nach außen durch eine nach innen weisende Fläche des Reflektors 5 begrenzt. Die Ebene E und die weitere Ebene E' bilden Begrenzungen an den beiden gegenüber liegenden Längsenden des Reflektors 5. Somit weist der Reflektor 5 eine Erstreckung entlang der optischen Achse A bzw. eine Höhe h auf, die vorzugsweise etwa so groß ist wie die Höhe H der TIR-Linse 2. Beispielsweise kann vorgesehen sein, dass das Verhältnis h / H zwischen 1 / 3 und 3 / 1 beträgt, vorzugsweise zwischen 1 / 2 und 2 / 1.

Der Reflektor 5 weist eine reflektierende Fläche 8 auf, die im gezeigten Beispiel durch die genannte nach innen weisende Fläche gebildet ist. Vorzugsweise ist diese reflektierende Fläche 8 hochglänzend. Beispielsweise kann sie metallisiert sein. Dies ist vorteilhaft mit Bezug auf den lichttechnischen Wirkungsgrad der Anordnung.

Mit "Lichteintrittsbereich" 6 des Reflektors 5 sei hier, wie erwähnt, dasjenige Areal bezeichnet, das durch den ersten Randbereich 51 umschrieben bzw. begrenzt ist. Durch den zweiten Randbereich 52 ist dementsprechend ein Lichtaustrittsbereich 53 des Reflektors 5 begrenzt.

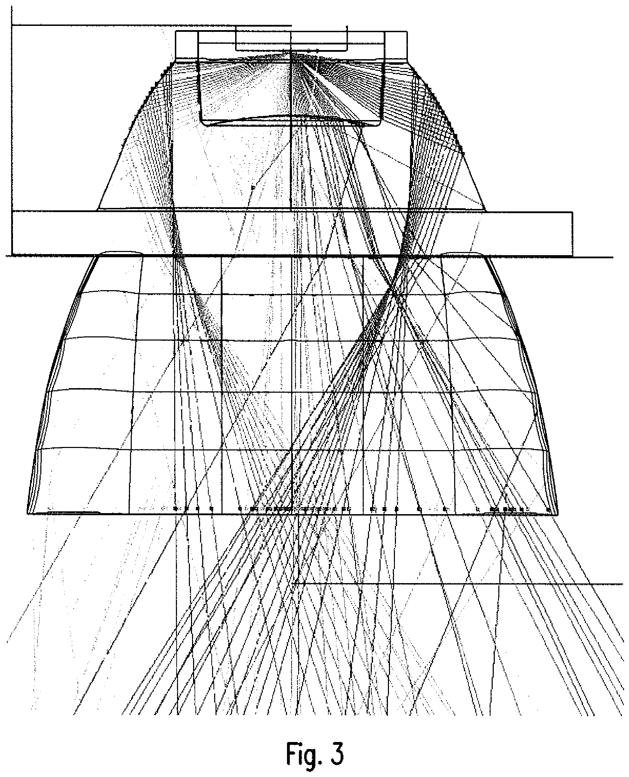

Fig. 3 zeigt exemplarisch den Verlauf einiger Lichtstrahlen durch die Anordnung. Dasjenige Licht, das über die Lichtaustrittsfläche 4 der TIR-Linse 2 austritt und durch den Lichteintrittsbereich 6 in den Innenbereich 7 des Reflektors 5 eintritt, verlässt zu einem Teil den Reflektor 5 ohne Wechselwirkung mit der reflektierenden Fläche 8 über den Lichtaustrittsbereich 53. Ein weiterer Teil dieses Lichts verlässt den Reflektor 5 über den Lichtaustrittsbereich 53 nach wenigstens einer Wechselwirkung mit der reflektierenden Fläche 8.

Dabei ist der Lichteintrittsbereich 6 des Reflektors 5 vorzugsweise etwa so groß wie die Lichtaustrittsfläche 4, so dass das aus der TIR-Linse 2 ausgetretene Licht besonders effektiv durch den Reflektor 5 beeinflusst werden kann. Dies ist somit vorteilhaft mit Bezug auf den lichttechnischen Wirkungsgrad der Anordnung.

Vorzugsweise weist der Lichteintrittsbereich 6 dementsprechend eine Größe auf, die zwischen 70% und 120% der Größe der Lichtaustrittsfläche 4 beträgt, insbesondere zwischen 75% und 110%. Eine völlige Übereinstimmung der Größen ist dabei jedoch nicht erforderlich. An der Mantelfläche 21 der TIR-Linse 2 wird das Licht total reflektiert und somit im Wesentlichen zur optischen Achse A hin gelenkt. Daher tritt insbesondere das aus der TIR-Linse 2 austretende Licht praktisch auch dann noch näherungsweise vollständig in den Reflektor 5 ein, wenn der Lichteintrittsbereich 6 des Reflektors 5 etwas kleiner ist als die Lichtaustrittsfläche 4 der TIR-Linse 2.

Vorzugsweise ist die TIR-Linse 2 zumindest überwiegend auf einer ersten Seite γ - mit Bezug auf die Darstellung in Fig. 1 oberhalb - einer Ebene angeordnet, die vorzugsweise normal zu der optischen Achse A orientiert ist und die insbesondere identisch mit der oben genannten Ebene E sein kann. Der Reflektor 5 erstreckt sich zumindest überwiegend auf einer, der ersten Seite γ gegenüber liegenden zweiten Seite µ bzw. unterhalb der Ebene E.

Vorzugsweise ist der Reflektor 5 unmittelbar an die TIR-Linse 2 angrenzend angeordnet. Im gezeigten Beispiel erstreckt sich die TIR-Linse 2 auf der ersten Seite γ bzw. oberhalb der der Ebene E bis zu der Ebene E hin und der Reflektor 5 auf der zweiten Seite µ bzw. unterhalb der Ebene E bis zu der Ebene E hin. So ist ein, in der Ebene E verlaufender Kontaktbereich zwischen der TIR-Linse 2 und dem Reflektor 5 gebildet, der insbesondere eine geschlossen ringförmige Form aufweist.

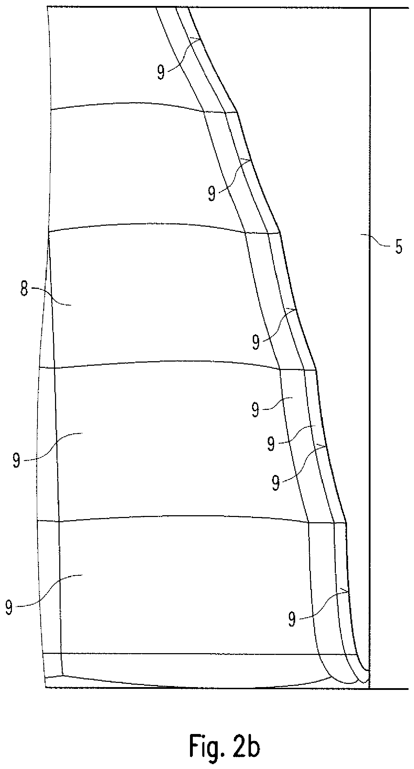

Erfindungsgemäß weist die reflektierende Fläche 8 des Reflektors 5 Segmente 9 auf, die jeweils eine konvexe Oberfläche aufweisen, insbesondere in Form eines Teils einer Kugeloberfläche. In Fig. 2b ist ein Detail aus Fig. 2a skizziert, das die mögliche Formgebung der Segmente 9 deutlicher zeigt. Insbesondere kann es sich bei den konvexen Oberflächen um Kalotten-Formen handeln. Durch diese Formgebung lässt sich besondere geeignet bewirken, dass die dort auftreffenden Lichtstrahlen derart reflektiert werden, dass eine mit Hilfe der Anordnung beleuchtete Arbeitsfläche besonders homogen beleuchtet erscheint, insbesondere auch in einem mittleren Bereich der Arbeitsfläche.

Vorzugsweise besteht die reflektierende Fläche 8 zumindest überwiegend aus den Segmenten 9, insbesondere zu mindestens 80%, besonders bevorzugt zu mindestens 90%.

Die Segmente 9 weisen dabei vorzugsweise eine Größe auf, die in der Größenordnung von 1 cm² liegt. Beispielsweise kann jedes der Segmente 9 durch eine konvexe Oberfläche gebildet sein, die zwischen 0,2 cm² und 5 cm² groß ist.

Im gezeigten Beispiel sind die Segmente 9 in mehreren Segment-Ebenen ausgebildet, die jeweils normal zu der optischen Achse A orientiert sind, beispielsweise in fünf Segment-Ebenen S1, S2, S3, S4, S5, wie in Fig. 1 angedeutet. Der Abstand zwischen zwei benachbarten der Segment-Ebenen S1, S2, S3, S4, S5 kann beispielsweise zwischen 0,5 cm und 2 cm betragen.

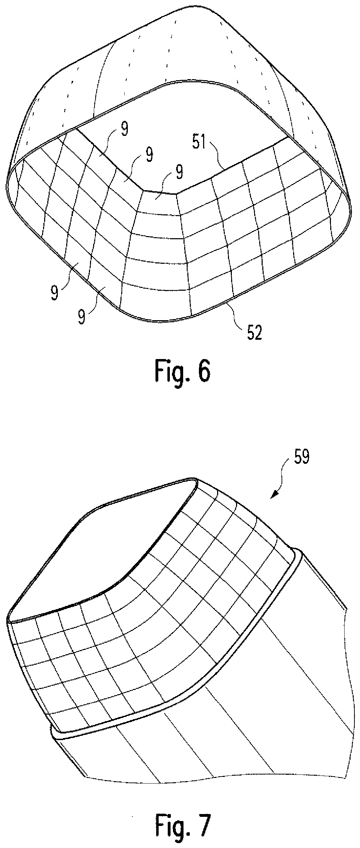

In Fig. 6 ist der Reflektor 5 in separierter Form perspektivisch bei schräger Sicht auf den Lichtaustrittsbereich 53 skizziert. Vorzugsweise grenzen die Segmente 9 praktisch unmittelbar aneinander. Beispielsweise kann die Gestaltung derart sein, dass sich in jeder der Segment-Ebenen S1, S2, S3, S4, S5 die Segmente 9 praktisch geschlossen ringförmig um die optische Achse A herum erstrecken. Beispielsweise kann vorgesehen sein, dass in jeder der Segment-Ebenen S1, S2, S3, S4, S5 die Anzahl der Segmente 9 zwischen zehn und fünfzig beträgt, beispielsweise, wie im gezeigten Beispiel der Fall zwanzig.

Herstellungstechnisch vorteilhaft kann vorgesehen sein, dass der Reflektor 5 als ein Spritzgussteil gestaltet ist. Ein entsprechendes mögliches Werkzeug 59, das nicht unter den Gegenstand der Ansprüche fällt, ist in Fig. 7 skizziert.

In einem Beispiel das nicht unter den Gegenstand der Ansprüche fällt, kann alternativ zu der beschriebenen Segmentierung der reflektierenden Fläche 8 vorgesehen sein, dass die reflektierende Fläche 8 glatt oder rau gestaltet ist. Beispielsweise kann die Fläche sandgestrahlt sein. Wenn die reflektierende Fläche 8 spiegelnd und unsegmentiert ausgestaltet ist, lässt sich eine Lichtabgabe erzielen, die durch eine Lichtverteilungskurve beschrieben werden kann, die - im Vergleich zu der segmentierten Gestaltung - zwei stärker ausgebildete seitliche Flügel aufweist.

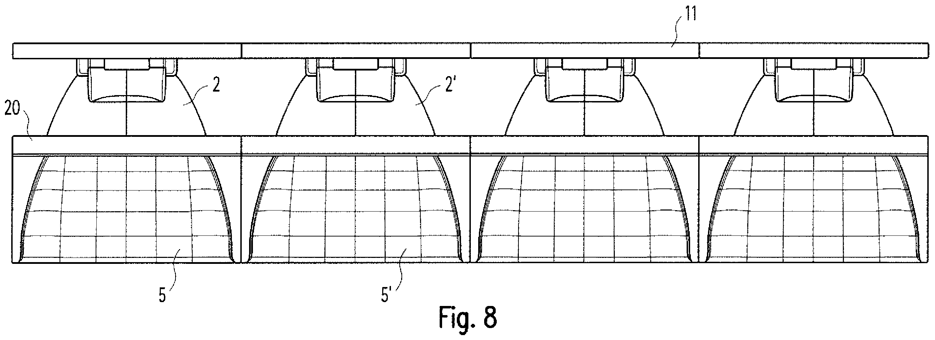

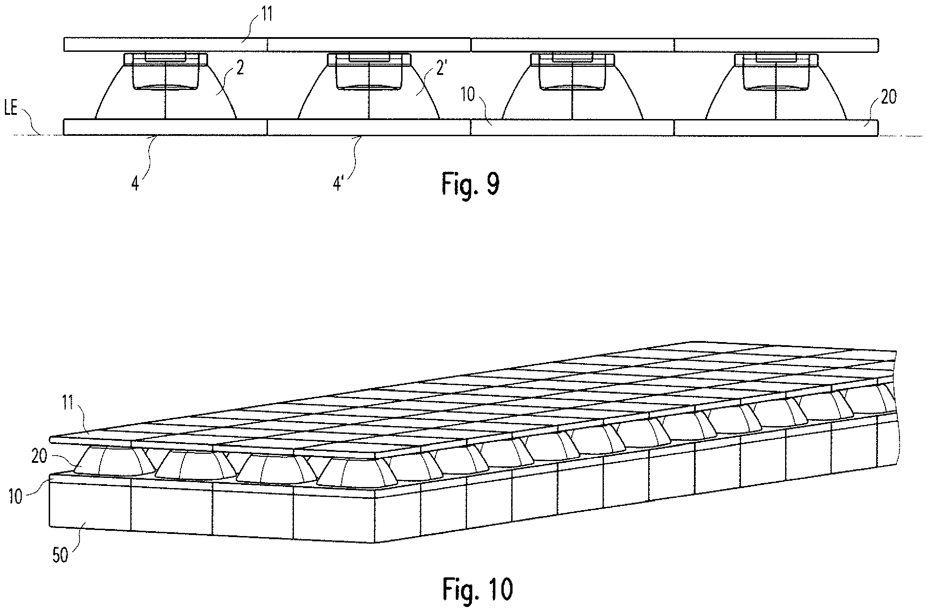

Weiterhin vorzugsweise ist die TIR-Linse 2 - wie in den Figuren 8 bis 14 skizziert - Teil eines optischen Elements 20. Das optische Element 20 umfasst außer der TIR-Linse 2, wie in Fig. 9 bezeichnet, zumindest eine weitere TIR-Linse 2', die identisch zu der zuerst genannten TIR-Linse 2 gestaltet ist, so dass das optische Element 20 dementsprechend zumindest eine entsprechende, durch die zumindest eine weitere TIR-Linse 2' gebildete weitere Lichtaustrittsfläche 4' aufweist. Das optische Element 20 ist dabei derart gestaltet ist, dass die Lichtaustrittsfläche 4 der zuerst genannten TIR-Linse 2 und die Lichtaustrittsfläche 4' der zumindest einen weiteren TIR-Linse 2' in einer Lichtaustrittsebene LE orientiert ausgebildet sind. Im gezeigten Beispiel ist die Lichtaustrittsebene LE identisch zu der oben genannten Ebene E.

Vorzugsweise ist das optische Element 20 derart gestaltet, dass die TIR-Linsen 2, 2' jeweils den oben bereits erwähnten Flanschbereich 10 aufweisen, wobei die Flanschbereiche vorzugsweise einstückig miteinander verbunden sind, so dass auf diese Weise eine Art Platte gebildet ist, über die die TIR-Linsen 2, 2' miteinander verbunden sind.

Wie in Fig. 8, die eine Skizze eines entsprechenden Schnitts zeigt, bezeichnet ist, weist die optische Anordnung vorzugsweise außerdem zumindest einen weiteren Reflektor 5' auf, wobei die zumindest eine weitere TIR-Linse 2" und der zumindest eine weitere Reflektor 5' analog zu der zuerst genannten TIR-Linse 2 und dem zuerst genannten Reflektor 5 gestaltet sind. Dabei sind der zumindest eine weitere Reflektor 5' und der zuerst genannte Reflektor 5 vorteilhaft Teile eines weiteren optischen Elements 50, das sozusagen ein Reflektor-Raster darstellt.

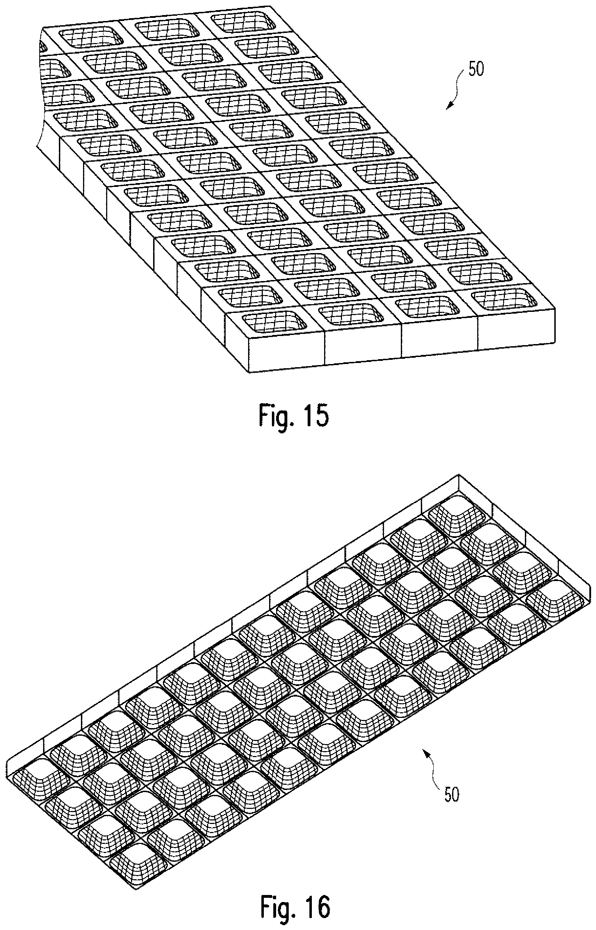

In Fig. 15 ist das weitere optische Element 50 in separierter Form perspektivisch bei schräger Sicht auf den Lichteintrittsbereich 6 des Reflektors 5 skizziert und in Fig. 16 bei schräger Sicht auf den Lichtaustrittsbereich 53 des Reflektors 5.

Das weitere optische Element 50 bzw. das Reflektor-Raster ist sozusagen auf der Unterseite der Flanschbereiche der TIR-Linsen 2, 2' bzw. auf der Unterseite der "Platte" angeordnet. Die Flanschbereiche bilden somit eine flächige Anlage für das Reflektor-Raster.

Wie gezeigt, ist durch das optische Element 50 vorzugsweise ein TIR-Linsen-Feld gebildet, wobei jeder der TIR-Linsen 2, 2' genau einer der Reflektoren 5, 5' zugeordnet ist. So sind durch die Anordnung mehrere optische Einheiten gebildet, die sich jeweils aus einer TIR-Linse und einem zugehörigen bzw. zugeordneten Reflektor zusammensetzen. Die optischen Einheiten sind vorzugsweise derart angeordnet, dass sie Spalten und Reihen bilden. Die Anzahl der Reihen und Spalten kann beispielsweise jeweils zwischen drei und hundert betragen.

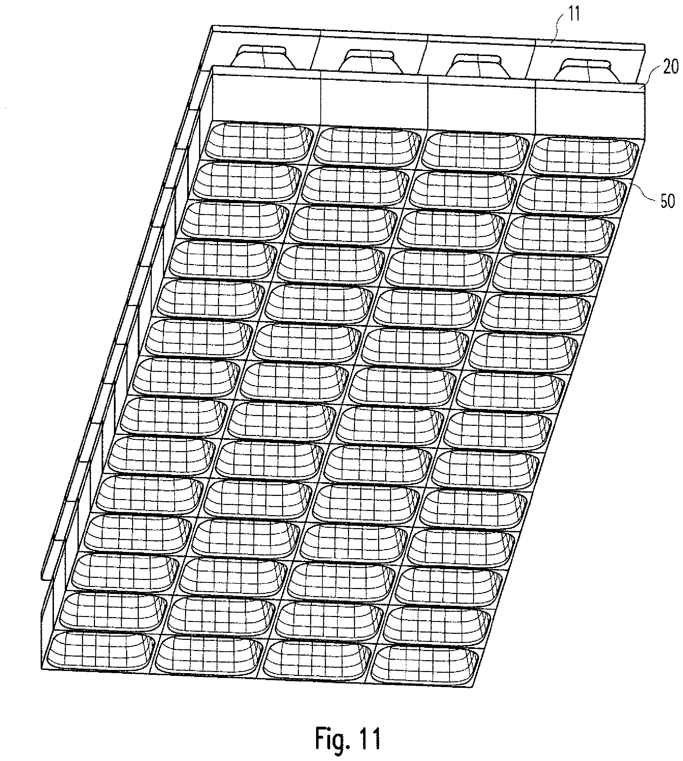

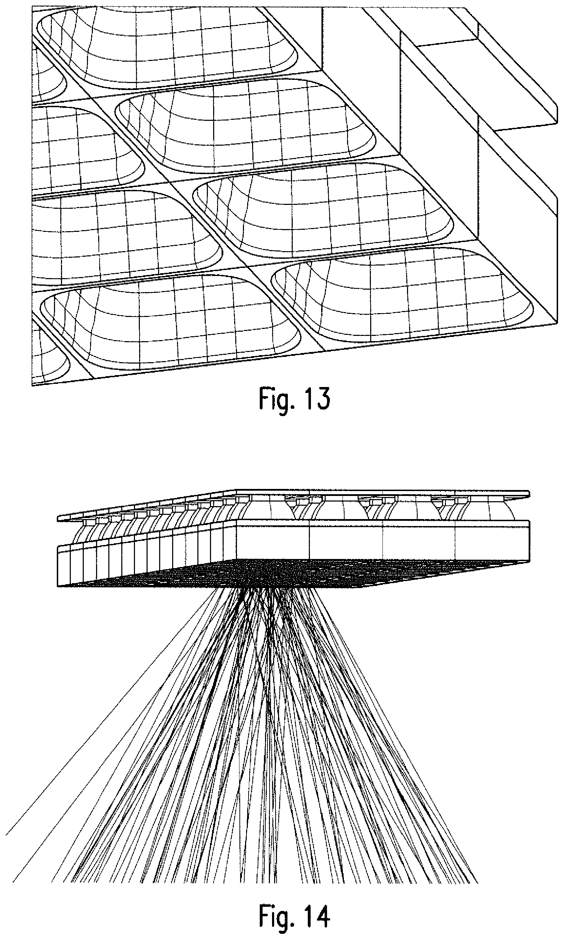

Bei einer Vorrichtung mit mehreren solchen Einheiten, umfasst die Lichtquelle 1 vorzugsweise mehrere LEDs, wobei jeder Einheit wenigstens eine LED zugeordnet ist, die ihr Licht über den jeweiligen Lichteintrittsbereich in die betreffende TIR-Linse der Einheit einstrahlt. Die Platine 11 der Lichtquelle 1 kann sich in diesem Fall vorteilhaft über das gesamte TIR-Linsen-Feld hinweg erstrecken. Die Figuren 10 und 11 zeigen Skizzen zu der Vorrichtung bei schräger Sicht von der Seite bzw. auf die Lichtaustrittsbereiche des Reflektor-Rasters. Fig. 13 zeigt einen Eckbereich der Vorrichtung vergrößert.

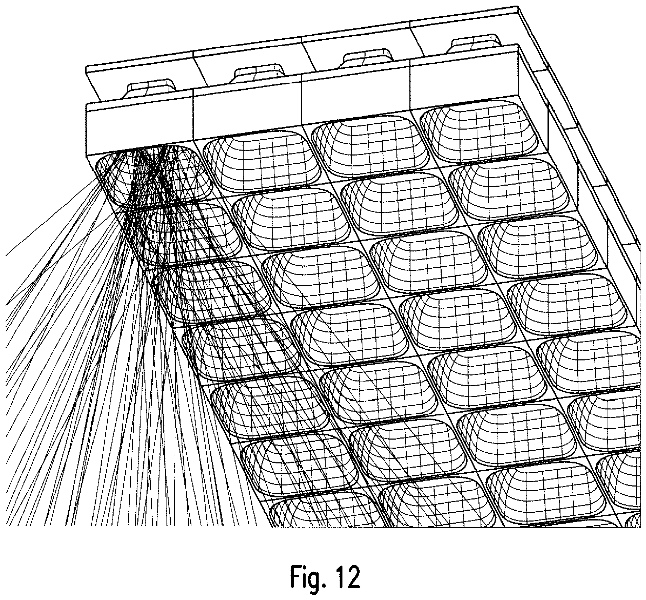

In den Figuren 12 und 14 sind exemplarisch Lichtstrahlen skizziert. Man erkennt, dass die Lichtabgabe in Winkelbereich über 40° (mit Bezug auf die optische Achse A) gegenüber der Lichtabgabe in dem Bereich bis 40° praktisch vernachlässigbar ist.

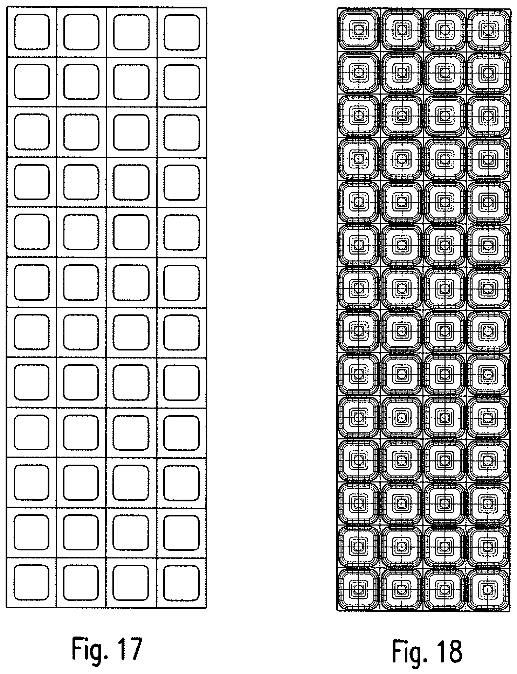

Fig. 17 zeigt eine Skizze der Reflektoren der Vorrichtung bei Sicht auf die Lichteintrittsbereiche, hier ist beispielhaft eine Ausführung gezeigt, die ein Feld von vier mal zwölf Einheiten bildet. Fig. 18 zeigt eine Skizze der Vorrichtung bei Sicht auf die Lichtaustrittsbereiche, hier bei vier mal vierzehn Einheiten.

Mit Hilfe einer erfindungsgemäßen optischen Anordnung bzw. Vorrichtung kann Licht über eine größere Fläche hinweg abgegeben werden, wobei eine hohe Intensität des Lichts bzw. "hohe Lumen-Pakete" erzielt werden können. Dabei eignet sich die Lichtabgabe beispielsweise besonders für eine Arbeitsflächenbeleuchtung, also beispielsweise in einem Büro-Bereich. Die Gefahr einer Blendung eines Nutzers der Vorrichtung ist dabei besonders gering. Es lässt sich ein vergleichsweise kleiner UGR-Wert (UGR: unified glare rating; vereinheitlichte Blendungsbewertung) erzielen, beispielsweise ein UGR-Wert von etwa 19. Demgegenüber ergäbe sich bei einer entsprechenden Vorrichtung ohne das Reflektor-Raster - bei identischem Lumen-Output und nahezu identischer FWHM (FWHM: full width at half maximum; Halbwertsbreite) bzw. nahezu identischem "Halbertswinkel" der Abstrahlung - ein UGR-Wert von etwa 22. Laut DIN EN 12464-1 sind beispielsweise für Computerarbeit, Lesen und Schreiben UGR-Werte von maximal 19 einzuhalten.

Für die Lichtabgabe im Winkelbereich über 65° lassen sich Werte von maximal 3000 cd/m² erzielen. Auch im Winkelbereich zwischen 40° und 65° lässt sich eine entsprechende Lichtstärkereduktion erzielen.

Außerdem lässt sich mit einer erfindungsgemäßen Vorrichtung erzielen, dass die Form eines beleuchteten Bereichs besonders scharf begrenzt erscheint.

## Patentansprüche

1. Optische Anordnung für eine Lichtquelle (1), aufweisend
- eine Total Internal Reflection Linse (TIR-Linse) (2) mit einer Lichteintrittsfläche (3) für einen Eintritt eines von der Lichtquelle (1) erzeugten Lichts in die TIR-Linse (2) und mit einer Lichtaustrittsfläche (4) für einen Austritt des Lichts aus der TIR-Linse (2),
- einen Reflektor (5) zur Beeinflussung des über die Lichtaustrittsfläche (4) aus der TIR-Linse (2) ausgetretenen Lichts, wobei durch den Reflektor (5) ein Lichteintrittsbereich (6) für einen Eintritt des aus der TIR-Linse (2) ausgetretenen Lichts in einen Innenbereich (7) des Reflektors (5) gebildet ist, wobei der Lichteintrittsbereich (6) in seiner Form der Form der Lichtaustrittsfläche (4) der TIR-Linse (2) entspricht, und wobei der Reflektor (5) eine reflektierende Fläche (8) mit Segmenten (9) aufweist,
**dadurch gekennzeichnet,**
**dass** die Lichtaustrittsfläche (4) plan ist und die Segmente (9) jeweils eine konvexe Oberfläche aufweisen, insbesondere in Form eines Teils einer Kugeloberfläche.

2. Optische Anordnung nach Anspruch 1,
**dadurch gekennzeichnet,**
**dass** durch die TIR-Linse (2) eine optische Achse (A) festgelegt ist, wobei der Reflektor (5) sich ringförmig, insbesondere geschlossen ringförmig um die optische Achse (A) herum erstreckend ausgebildet ist.

3. Optische Anordnung nach Anspruch 1 oder 2,
**dadurch gekennzeichnet,**
**dass** die TIR-Linse (2) zumindest überwiegend auf einer ersten Seite (γ) einer Ebene (E) angeordnet ist und der Reflektor (5) zumindest überwiegend auf einer, der ersten Seite (γ) gegenüber liegenden zweiten Seite (µ) der Ebene (E).

4. Optische Anordnung nach einem der vorhergehenden Ansprüche,
**dadurch gekennzeichnet,**
**dass** der Reflektor (5) unmittelbar an die TIR-Linse (2) angrenzend angeordnet ist.

5. Optische Anordnung nach einem der vorhergehenden Ansprüche,
**dadurch gekennzeichnet,**
**dass** der Lichteintrittsbereich (6) eine Größe aufweist, die zwischen 70% und 120% der Größe der Lichtaustrittsfläche (4) beträgt.

6. Optische Anordnung nach einem der vorherigen Ansprüche,
**dadurch gekennzeichnet,**
**dass** die reflektierende Fläche (8) hochglänzend ist, insbesondere metallisiert ist.

7. Optische Anordnung nach einem der vorhergehenden Ansprüche,
**dadurch gekennzeichnet,**
**dass** der Reflektor (5) als ein Spritzgussteil gestaltet ist.

8. Optische Anordnung nach einem der vorhergehenden Ansprüche,
**dadurch gekennzeichnet,**
**dass** ein optisches Element (20) der optischen Anordnung die TIR-Linse (2) beinhaltet, wobei das optische Element (20) zumindest eine weitere TIR-Linse (2') umfasst, die identisch zu der TIR-Linse (2) gestaltet ist, so dass sie dementsprechend zumindest eine weitere Lichtaustrittsfläche (4') aufweist, wobei das optische Element (20) derart gestaltet ist, dass die Lichtaustrittsfläche (4) der TIR-Linse (2) und die Lichtaustrittsfläche (4') der zumindest einen weiteren TIR-Linse (2') in einer Lichtaustrittsebene (LE) orientiert ausgebildet sind.

9. Optische Anordnung nach Anspruch 8,
**gekennzeichnet durch**
- zumindest einen weiteren Reflektor (5'), wobei die zumindest eine weitere TIR-Linse (2') und der zumindest eine weitere Reflektor (5') analog zu der TIR-Linse (2) und dem Reflektor (5) gestaltet sind.

10. Optische Anordnung nach Anspruch 9,
**dadurch gekennzeichnet,**
**dass** ein weiteres optisches Element (50) der optischen Anordnung den zumindest einen weiteren Reflektor (5') und den Reflektor (5) beinhaltet.

11. Vorrichtung zur Lichtabgabe, aufweisend
- eine Lichtquelle (1) und
- eine optische Anordnung für die Lichtquelle nach einem der vorhergehenden Ansprüche, wobei die Lichtquelle (1) derart angeordnet ist, dass ein von ihr abgegebenes Licht über die Lichteintrittsfläche (3) in die TIR-Linse (2) der optischen Anordnung eintreten kann.

## Claims

1. Optical arrangement for a light source (1), having
- a total internal reflection lens (TIR lens) (2) having a light entry surface (3) for entry of a light generated by the light source (1) into the TIR lens (2) and having a light exit surface (4) for exit of the light from the TIR lens (2),
- a reflector (5) for influencing the light exiting from the TIR lens (2) via the light exit surface (4), the reflector (5) forming a light entry region (6) for entry of the light exiting from the TIR lens (2) into an inner region (7) of the reflector (5), the light entry region (6) corresponding, in its shape, to the shape of the light exit surface (4) of the TIR lens (2), and the reflector (5) having a reflective surface (8) having segments (9),
**characterized in**
**that** the light exit surface (4) is flat and the segments (9) each have a convex surface, in particular in the form of part of a spherical surface.

2. Optical arrangement according to claim 1,
**characterized in**
**that** an optical axis (A) is defined by the TIR lens (2), the reflector (5) being designed to extend in a ring shape, in particular in a closed ring shape, around the optical axis (A).

3. Optical arrangement according to either claim 1 or claim 2,
**characterized in**
**that** the TIR lens (2) is arranged at least predominantly on a first side (γ) of a plane (E) and the reflector (5) is arranged at least predominantly on a second side (µ) of the plane (E) opposite the first side (γ).

4. Optical arrangement according to any of the preceding claims,
**characterized in**
**that** the reflector (5) is directly adjacent to the TIR lens (2).

5. Optical arrangement according to any of the preceding claims,
**characterized in**
**that** the light entry region (6) has a size which is between 70% and 120% of the size of the light exit surface (4).

6. Optical arrangement according to any of the preceding claims,
**characterized in**
**that** the reflective surface (8) is high-gloss, in particular is metalized.

7. Optical arrangement according to any of the preceding claims,
**characterized in**
**that** the reflector (5) is designed as an injection-molded part.

8. Optical arrangement according to any of the preceding claims,
**characterized in**
**that** an optical element (20) of the optical arrangement includes the TIR lens (2), the optical element (20) comprising at least one further TIR lens (2') which is identical to the TIR lens (2) so that the further TIR lens accordingly has at least one further light exit surface (4'), the optical element (20) being designed such that the light exit surface (4) of the TIR lens (2) and the light exit surface (4') of the at least one further TIR lens (2') are oriented in a light exit plane (LE).

9. Optical arrangement according to claim 8,
**characterized by**
- at least one further reflector (5'), the at least one further TIR lens (2') and the at least one further reflector (5') being designed analogously to the TIR lens (2) and the reflector (5).

10. Optical arrangement according to claim 9,
**characterized in**
**that** a further optical element (50) of the optical arrangement includes the at least one further reflector (5') and the reflector (5).

11. Device for emitting light, having
- a light source (1), and
- an optical arrangement for the light source according to any of the preceding claims, wherein the light source (1) is arranged such that a light emitted by it can enter the TIR lens (2) of the optical arrangement via the light entry surface (3).

## Revendications

1. Agencement optique pour une source de lumière (1), présentant
- une lentille à réflexion totale interne (lentille TIR) (2) comportant une surface d'entrée de lumière (3) pour une entrée d'une lumière générée par la source de lumière (1) dans la lentille TIR (2) et comportant une surface de sortie de lumière (4) pour une sortie de la lumière hors de la lentille TIR (2),
- un réflecteur (5) destiné à influencer la lumière sortie hors de la lentille TIR (2) par l'intermédiaire de la surface de sortie de lumière (4), une zone d'entrée de lumière (6) pour une entrée de la lumière sortie hors de la lentille TIR (2) dans une zone interne (7) du réflecteur (5) étant formée par le réflecteur (5), la forme de la zone d'entrée de lumière (6) correspondant à la forme de la surface de sortie de lumière (4) de la lentille TIR (2), et le réflecteur (5) présentant une surface réfléchissante (8) comportant des segments (9),
**caractérisé en ce**
**que** la surface de sortie de lumière (4) est plane et les segments (9) présentent respectivement une surface convexe, en particulier sous la forme d'une partie d'une surface sphérique.

2. Agencement optique selon la revendication 1,
**caractérisé en ce**
**qu'**un axe optique (A) est défini à travers la lentille TIR (2), le réflecteur (5) étant conçu de manière à s'étendre en forme d'anneau, en particulier en forme d'anneau fermé, autour de l'axe optique (A).

3. Agencement optique selon la revendication 1 ou 2,
**caractérisé en ce**
**que** la lentille TIR (2) est disposée au moins principalement sur une première face (γ) d'un plan (E) et le réflecteur (5) est disposé au moins principalement sur une seconde face (µ) du plan (E) opposée à la première face (γ).

4. Agencement optique selon l'une des revendications précédentes,
**caractérisé en ce**
**que** le réflecteur (5) est disposé de manière directement adjacente à la lentille TIR (2).

5. Agencement optique selon l'une des revendications précédentes,
**caractérisé en ce**
**que** la zone d'entrée de lumière (6) présente une dimension qui représente entre 70 % et 120 % de la dimension de la surface de sortie de lumière (4).

6. Agencement optique selon l'une des revendications précédentes,
**caractérisé en ce**
**que** la surface réfléchissante (8) est hautement brillante, en particulier est métallisée.

7. Agencement optique selon l'une des revendications précédentes,
**caractérisé en ce**
**que** le réflecteur (5) est conçu comme une pièce moulée par injection.

8. Agencement optique selon l'une des revendications précédentes,
**caractérisé en ce**
**qu'**un élément optique (20) de l'agencement optique contient la lentille TIR (2), l'élément optique (20) comprenant au moins une autre lentille TIR (2') qui est conçue de manière identique à la lentille TIR (2), de telle sorte qu'elle présente de manière correspondante au moins une autre surface de sortie de lumière (4'), l'élément optique (20) étant conçu de manière telle que la surface de sortie de lumière (4) de la lentille TIR (2) et la surface de sortie de lumière (4') de l'au moins une autre lentille TIR (2') sont réalisées de manière à être orientées dans un plan de sortie de lumière (LE).

9. Agencement optique selon la revendication 8,
**caractérisé par**
- au moins un autre réflecteur (5'), l'au moins une autre lentille TIR (2') et l'au moins un autre réflecteur (5') étant conçus de manière analogue à la lentille TIR (2) et au réflecteur (5).

10. Agencement optique selon la revendication 9,
**caractérisé en ce**
**qu'**un autre élément optique (50) de l'agencement optique contient l'au moins un autre réflecteur (5') et le réflecteur (5).

11. Dispositif permettant l'émission de lumière, présentant
- une source de lumière (1) et
- un agencement optique pour la source de lumière selon l'une des revendications précédentes, la source de lumière (1) étant disposée de manière telle qu'une lumière émise par celle-ci peut entrer dans la lentille TIR (2) de l'agencement optique par l'intermédiaire de la surface d'entrée de lumière (3).
